# EUROPÄISCHE PATENTSCHRIFT

(11) **EP 3 036 561 B1**
(45) Veröffentlichungstag und Bekanntmachung des Hinweises auf die Patenterteilung: **31.01.2018**
(21) Anmeldenummer: 14753260.0
(22) Anmeldetag: 21.08.2014
(51) Int. Cl.: G01S 7/497, G01S 7/486, G01S 17/02

(54) **STÖRKOMPENSIERTE VORRICHTUNG ZUR VERMESSUNG EINER OPTISCHEN SIGNALÜBERTRAGUNGSSTRECKE**
INTERFERENCE-COMPENSATED DEVICE FOR MEASURING AN OPTICAL SIGNAL TRANSMISSION PATH
DISPOSITIF À COMPENSATION D'EFFETS PARASITES POUR MESURER UN TRAJET DE TRANSMISSION OPTIQUE

(30) Priorität: 22.08.2013 WO PCT/EP2013/067480
(43) Veröffentlichungstag der Anmeldung: 29.06.2016
(60) Teilanmeldung: 16187776.6
(73) Patentinhaber: Elmos Semiconductor Aktiengesellschaft, 44227 Dortmund (DE)
(72) Erfinder: MELCHER, Rolf, 76646 Bruchsal (DE); STELLBERGER, Achim, 76646 Bruchsal (DE); DOMOKOS, Michael, 76646 Bruchsal (DE)
(74) Vertreter: dompatent von Kreisler Selting Werner - Partnerschaft von Patent- und Rechtsanwälten mbB
(86) Internationale Anmeldenummer: PCT/EP2014/067851
(87) Internationale Veröffentlichungsnummer: WO 2015/025014

(56) Entgegenhaltungen:
- EP-A1- 1 426 783
- DE-B3- 10 300 223

## Beschreibung

### Einleitung und Stand der Technik

Die Erfindung betrifft eine störstrahlungskompensierte Vorrichtung zur Vermessung einer optischen Signalübertragungsstrecke während einer Vielzahl von insbesondere intermittierend aufeinanderfolgenden Messintervallen insbesondere für die Erkennung eines Objekts und/oder für die Erkennung einer Bewegung und/oder Bewegungsrichtung eines Objekts.

Aus dem Stand der Technik sind verschiedene Verfahren zur Vermessung optischer Strecken bekannt.

Hierbei wird typischerweise eine Fotodiode in Sperrrichtung betrieben. Es hat sich als besonders vorteilhaft erwiesen, die Fotodiode zur Kompensation eines aus (z.B. Umgebungs-)Störstrahlung resultierenden Fotostroms durch eine spannungsgesteuerte Stromquelle zu bestromen und in einem spannungsmäßig vorbestimmten Arbeitspunkt zu halten.

Eine besonders vorteilhafte Anordnung zur Vermessung einer optischen Übertragungsstrecke oder zur Vermessung eines Objekts, das sich innerhalb einer solchen Übertragungsstrecke befindet, ist die Vermessung mit Hilfe einer Kompensationsmethode, wie sie z.B. unter dem Namen HALIOS® bekannt ist. Hierbei strahlen ein Kompensationssender und ein Sender gleichzeitig überlagernd in einen Empfänger ein. Das Signal des Kompensationssenders ist dabei zeitlich komplementär, d.h. um 180° phasenverschoben zu demjenigen des Senders gewählt. Das bedeutet, dass sich beide Signale bei gleicher Einstrahlamplitude in dem Empfängersignal zu einem Gleichsignal überlagern.

Eine Regelung erzeugt aus dem Empfangssignal ein Regelsignal. Mit diesem Regelsignal wird nun entweder der Sender oder der Kompensationssender oder auch nach einem festen Regelschema beide Sender geregelt.

Bei richtiger Vorzeichenwahl der Verstärkung des Reglers werden parasitäre Einflüsse eliminiert. Dies betrifft vor allem Verschmutzungen und Drift des Empfängers.

Vorrichtungen der zuvor genannten Art sind beispielhaft EP-A-1 426 783 und DE-B-103 00 223 beschrieben.

Es hat sich gezeigt, dass die Verwendung von spannungsgesteuerten Stromquellen zur Einstellung eines Kompensations- bzw. Bias-Stromes für als Empfänger verwendete Fotodioden besonders vorteilhaft ist. Dies ist beispielsweise bereits in DE-A-102 56 429 beschrieben. Andere Schaltungen bzw. Bauteile für die Störstrahlungs-Fotostromkompensation können aber ebenso genutzt werden.

Ein wesentlicher Nachteil einer Arbeitspunkteinstellung der obigen Art mit Hilfe eines Gyrators ist der niedrige Eingangswiderstand des Gyrators, der das Ausgangssignal der Fotodiode belastet und dämpft.

Dies führt zu einer Reduktion der Empfindlichkeit. Soll ein derartiges System zur Erkennung dreidimensionaler Gesten eingesetzt werden, so wird die Reichweite des Systems herabgesetzt.

Auf der anderen Seite kann die Empfindlichkeit für das Messsignal erhöht werden. Dies geschieht jedoch zu Lasten der Störempfindlichkeit. Es ist ein bekanntes Problem, dass beispielsweise optische Gestenerkennungssysteme durch Leuchtstoffröhren gestört werden können.

### Aufgabe der Erfindung

Es ist daher die Aufgabe der Erfindung, eine störstrahlungskompensierte Vorrichtung mit der Möglichkeit einer Arbeitspunkteinstellung insbesondere für Anwendungen in der Gestenerkennung bereitzustellen, die das Messergebnis nicht beeinträchtigt und robust gegenüber externen Störungen ist.

Zur Lösung dieser Aufgabe wird mit der Erfindung eine störstrahlungskompensierte Vorrichtung zur Vermessung einer optischen Signalübertragungsstrecke während einer Vielzahl von insbesondere intermittierend aufeinanderfolgenden Messintervallen insbesondere für die Erkennung eines Objekts und/oder für die Erkennung einer Bewegung und/oder Bewegungsrichtung eines Objekts vorgeschlagen, wobei die Vorrichtung versehen ist mit den Merkmalen des Anspruchs 1. Einzelne Ausgestaltungen der Erfindung sind Gegenstand der Unteransprüche.

Ausgangspunkt für die Überlegungen, die zur Erfindung geführt haben, ist eine reduzierte Strom- bzw. Energieaufnahme einer störstrahlungskompensierten Vorrichtung zur Vermessung einer optischen Signalübertragungsstrecke. Die reduzierte Stromaufnahme ist insbesondere vorteilhaft beim Einsatz einer solchen Vorrichtung in mobilen Geräten, die lediglich über begrenzte Energieressourcen verfügen.

Wenn optische Signalübertragungsstrecken vermessen werden, um beispielsweise die Annäherung eines Objekts, eine Verschmutzung o.dgl. erkennen zu können, besteht stets das Problem darin, dass derartige Signalübertragungsstrecken durch Umgebungslicht "gestört" werden. Dabei stellt sich die weitere Schwierigkeit dahingehend dar, dass die Störsignale weitaus größer sind als die Nutzsignale. Würde man also die Störung vorab nicht kompensieren, bestünde die Gefahr, das Nutzsignal innerhalb des Störsignals nicht so ohne Weiteres erkennen zu können. Man könnte sicherlich mit kodierten Nutzsignalen arbeiten, um dann durch Autokorrelation o.dgl. Korrelationsverfahren das Nutzsignal aus dem Gesamtsignal extrahieren zu können. Derartige auch unter dem Begriff Spreizcode-Verfahren bekannte Systeme sind aber in ihrer Umsetzung recht aufwändig.

Zur Störstrahlungskompensation optischer Empfänger von Vorrichtungen zur Vermessung optischer Signalübertragungsstrecken werden Störstrahlungs-Kompensationseinheiten eingesetzt, die einen Strom erzeugen, der im Wesentlichen gleich demjenigen Strom ist, der im Empfänger in Folge des Empfangs von Umgebungslicht o.dgl. Störlicht entsteht. Wird dann ein derartig störkompensierter Empfänger mit einem Nutz- bzw. optischen Messsignal beaufschlagt, wie es für die Vermessung der optischen Signalübertragungsstrecke erforderlich ist, so wird in der Ansteuer- und Auswerteeinheit anschließend auch nur noch dieses empfangene Messsignal ausgewertet.

Die Störstrahlungskompensation sollte recht stabil sein, damit die Vorrichtung zuverlässige Auswertungen und Vermessungen der optischen Signalübertragungsstrecke liefert. Dies ist grundsätzlich kein Problem bei dauerhaft aktivierten Vorrichtungen, also bei Vorrichtungen, die im Grunde genommen ständig messbereit sind. Da eine solche Vorgehensweise aber auch während der Zeiträume, in denen nicht zwingend gemessen werden muss, Energie benötigt, eignet sich eine solche Vorgehensweise bei mobilen Endgeräten mit begrenzten Energieressourcen nicht. Daher wird bei der Erfindung dazu übergegangen, die Vorrichtung lediglich für einzelne Messintervalle messbereit zu halten. In den Zeiträumen (Messpausen) zwischen den Messintervallen benötigt die Vorrichtung dann lediglich eine vergleichsweise geringe Stromaufnahme.

Die Störstrahlungs-Kompensationseinheit ist wie die Ansteuer- und Auswerteeinheit elektrisch mit dem Empfänger gekoppelt. Damit nun ein vom Empfänger empfangenes Nutzsignal zu nahezu 100 % von der Ansteuer- und Auswerteeinheit auch empfangen werden kann, sollte die Störstrahlungs-Kompensationseinheit relativ hochohmig ausgeführt sein, so dass das am Ausgang des Empfängers anstehende elektrische Signal nur zu einem sehr geringen Anteil zur Störstrahlungs-Kompensationseinheit "abfließt" und damit in ganz überwiegendem Maße der Ansteuer- und Auswerteeinheit zugeführt werden kann. Eine hochohmige Störstrahlungs-Kompensationseinheit, also eine Störstrahlungs-Kompensationseinheit mit hohem Innenwiderstand ist aber insoweit nachteilig, als sie die Arbeitspunkteinstellung im Vorfeld der Bereitschaltung der Vorrichtung für den Empfang von Nutzsignalen verlangsamt. Während dieser Phase des Betriebs der Vorrichtung ist es nämlich wünschenswert, wenn die Störstrahlungs-Kompensationseinheit einen geringen Innenwiderstand aufweist.

Erfindungsgemäß wird also nun der Innenwiderstand der Störstrahlungs-Kompensationseinheit in einer Vorbereitungsphase, die vor der eigentlichen Messphase eines Messintervalls liegt, auf einen niedrigen ersten Widerstandswert eingestellt, während der Innenwiderstand für die Dauer der Messphase auf einen höheren zweiten Widerstandswert gesteuert wird. Mit "variablem" Widerstand ist im Sinne der Erfindung gemeint, dass der Widerstand einen von mehr als zwei unterschiedlichen Werten (Impedanz, ohmsch, kapazitiv und/oder induktiv) annehmen kann, wobei die Widerstandswerte vorzugsweise jeweils ungleich Null und/oder ungleich Unendlich sind. Mit "variabel" ist also insbesondere nicht der Falle eines festen Vor- oder Innenwiderstands gemeint, der je nach Bedarf aufgeschaltet oder überbrückt also "aktiviert" oder "deaktiviert" wird.

Bei der zuvor beschriebenen Variante der Erfindung ist der Empfänger zwischen Masse und einem Arbeitspotential geschaltet, das durch die Störstrahlungs-Kompensationseinheit definiert ist. Es ist darüber hinaus möglich und von der Erfindung umfasst, dass der Empfänger zwischen zwei Schaltungsknoten geschaltet ist, wobei jeder dieser Schaltungsknoten mit einer Störstrahlungs-Kompensationseinheit verbunden/gekoppelt ist, die Vorrichtung also zwei Störstrahlungs-Kompensationseinheiten aufweist. Das Nutzsignal wird dabei zwischen diesen beiden Schaltungsknoten abgegriffen und in der Ansteuer- und Auswerteeinheit verarbeitet. Eine derartige Zweikanal-Ausführung der Vorrichtung weist eine verbesserte Robustheit gegenüber elektrischen und/oder magnetischen Fernfeldstörungen auf. Der Gedanke dabei ist es, zwei geometrisch und/oder elektrisch im wesentlichen identische Messkanäle vorzusehen, die Fernfeldstörungen im wesentlichen im gleichen Maße ausgesetzt sind, um die durch Fernfeldstörungen erzeugten Störsignale in einem nachgeschalteten (Haupt-)Differenzbildner zu eliminieren. Sofern die beiden Sensorelemente und/oder Messkanäle eine bekannte Ungleichheit (auch Asymmetrie genannt) aufweisen, kann diese durch eine (ggf. einstellbare) Gewichtung im Differenzbildner ausgeglichen werden, was insbesondere im Hinblick auf eine hohe Unterdrückung von elektromagnetischem Rauschen erfolgt.

Insoweit ist es also zweckmäßig, wenn der mindestens eine Empfänger zwischen einem ersten und einem zweiten Schaltungsknoten, mit denen er jeweils elektrisch gekoppelt ist, geschaltet ist, wobei die mindestens eine erste Störstrahlungs-Kompensationseinheit mit dem ersten Schaltungsknoten gekoppelt ist, wobei die an und/oder zwischen diesen Schaltungsknoten anstehenden elektrischen Signale der Ansteuer- und Auswerteinheit zuführbar sind und wobei mindestens eine zweite Störstrahlungs-Kompensationseinheit mit variablem Innenwiderstand vorhanden ist, die einen zweiten Kompensationsstrom bereitstellt, welcher im Wesentlichen gleich dem ersten Kompensationsstrom ist, und wobei die Ansteuer- und Auswerteeinheit den Innenwiderstand der zweiten Störstrahlungs-Kompensationseinheit während eines Messintervalls in im Wesentlichen gleicher Weise wie den Innenwiderstand der ersten Störstrahlungs-Kompensationseinheit steuert. Diese Verschaltung des Empfängers mit zwei Schaltungsknoten führt zu einer Gleichtaktunterdrückung von Störstrahlungen.

Zur weiteren Kompensation von auf die Vorrichtung einwirkenden Störeinflüssen ist es zweckmäßig, wenn der Empfänger wechselweise optische Signale empfängt, die alternierend von dem Messsender und von einem Kompensationssender ausgesendet werden. Der Kompensationssender strahlt dabei direkt in den Empfänger ein, während der Messsender in die Übertragungsstrecke strahlt, wobei das Messsignal bei Vorhandensein eines Objekts zum Empfänger teilweise reflektiert wird. Dieses Konzept entspricht dem Messsystem gemäß HALIOS®.

Bei einem derartigen Konzept kann in vorteilhafter Weise vorgesehen sein, dass die Ansteuer- und Auswerteeinheit den mindestens einen Kompensationssender zwecks Sendens des optischen Kompensationssignals während einer sich an die erste Vorbereitungsphase anschließenden und der Messphase vorgelagerten zweiten Vorbereitungsphase eines Messintervalls ansteuert und dass die Ansteuer- und Auswerteeinheit den Innenwiderstand der mindestens einen ersten Störstrahlungs-Kompensationseinheit und, sofern vorhanden, der mindestens einen zweiten Störstrahlungs-Kompensationseinheit für die Dauer der zweiten Vorbereitungsphase eines Messintervalls auf einen Widerstandswert einstellt, der gleich dem ersten und/oder zweiten Widerstandswert oder zwischen diesen liegt und größer ist als während des Messintervalls sowie größer ist als außerhalb der zweiten Vorbereitungsphase. In dieser zweiten Vorbereitungsphase sendet der Kompensationssender vorzugsweise kontinuierlich, so dass sich die Störstrahlungs-Kompensationseinheit bzw. -einheiten arbeitspunktmäßig auf diese Situation einstellen kann/können. Auch in dieser zweiten Vorbereitungsphase, die zwischen der ersten Vorbereitungsphase und der Messphase eines Messintervalls liegt, weist die bzw. jede Störstrahlungs-Kompensationseinheit einen Innenwiderstandswert auf, der kleiner ist als während der Messphase; die Störstrahlungs-Kompensationseinheit bzw. -einheiten reagieren also wiederum relativ schnell, wobei es dabei bleibt, dass sie hochohmig geschaltet sind, wenn in der Messphase die eigentliche Messung erfolgt.

In vorteilhafter Weiterbildung der Erfindung kann vorgesehen sein, dass der mindestens eine Messsender und/oder der mindestens eine Kompensationssender zumindest während der Messphase modulierte optische Signale aussendet/aussenden.

In einer anderen vorteilhaften Ausgestaltung der Erfindung kann vorgesehen sein, dass zumindest Anteile des Kompensationssignals komplementär, d.h. gegenphasig bzw. um 180° phasenverschoben zum Messsignal sind.

Ferner ist es zweckmäßig, dass zumindest Anteile des Messsignals und des Kompensationssignals einander überlagernd, insbesondere addierend oder multiplizierend von dem mindestens einen Empfänger empfangen werden.

In weiterer vorteilhafter Ausgestaltung der Erfindung kann ferner vorgesehen sein, dass die mindestens eine Störstrahlungs-Kompensationseinheit als eine spannungsgesteuerte Stromquelle, als ein Gyrator, als eine variable Impedanz, als ein variabler Widerstand oder als eine variable Induktivität ausgebildet ist.

Eine weitere Variante der Erfindung betrifft eine Vorrichtung zur Vermessung einer für die Erfassung eines Objekts bestimmten optischen Signalübertragungsstrecke während einer Vielzahl von insbesondere intermittierend aufeinanderfolgenden Messintervallen, insbesondere für die Erkennung eines Objekts und/oder für die Erkennung einer Bewegung und/oder Bewegungsrichtung eines Objekts, wobei diese Vorrichtung versehen ist mit
- mindestens einem Messsender zum Senden eines optischen Messsignals,
- mindesten einem Empfänger zum Empfang eines optischen Signals und
- einer Ansteuer- und Auswerteeinheit zur Ansteuerung des mindestens einen Messsenders und des mindestens einen Empfängers zwecks Sendens bzw. Empfangens eines optischen Signals während einer Messphase eines Messintervalls und zur Auswertung des empfangenen optischen Signals durch Verarbeitung eines elektrischen Signals, das an einem ersten elektrisch mit dem mindestens einen Empfänger gekoppelten Schaltungsknoten ansteht,
- wobei die Ansteuer- und Auswerteeinheit anhand von Auswertesignalen detektiert, ob sich ein Objekt innerhalb der Signalübertragungsstrecke befindet oder nicht, und so lange, wie kein Objekt innerhalb der Übertragungsstrecke erfasst wird, die Messintervalle mit einer niedrigen ersten Wiederholfrequenz durchführt und
- wobei die Ansteuer- und Auswerteeinheit dann, wenn ein Objekt in der Signalübertragungsstrecke erkannt wird, die Messintervalle mit einer hohen zweiten Wiederholfrequenz durchführt.

Hierbei kann vorteilhafterweise vorgesehen sein, dass die Durchführung der Messintervalle mit der hohen zweiten Wiederholfrequenz ab der letzten Nicht-Erkennung eines Objekts innerhalb der Signalübertragungsstrecke für eine vorgebbare Zeitspanne beibehalten bleibt, bevor auf die niedrige erste Wiederholfrequenz umschaltbar ist.

Ferner kann die Vorrichtung versehen sein mit einem Prozessor zur Weiterverarbeitung der Auswertesignale der Ansteuer- und Auswerteeinheit, wobei die Ansteuer- und Auswerteeinheit Auswertesignale, die die Nichtexistenz eines Objekts repräsentieren, nicht an den Prozessor überträgt und den Prozessor zumindest über das erstmalige Erkennen eines Objekts innerhalb der Signalübertragungsstrecke informiert.

Außerdem oder alternativ kann der Prozessor die Ansteuer- und Auswerteeinheit zum Umschalten der Wiederholrate der Messintervalle von der hohen ersten Wiederholfrequenz auf die niedrige zweite Wiederholfrequenz veranlassen.

Des Weiteren kann der Betrieb der Vorrichtung wahlweise in einem Normalmodus oder in einem Energiesparmodus mit gegenüber dem Normalmodus verringerter Energieaufnahme erfolgen.

Hierbei kann es zweckmäßig sein, wenn die Vorrichtung einen Prozessor zur Weiterverarbeitung der Auswertesignale der Ansteuer- und Auswerteeinheit aufweist, wobei der Prozessor die Umschaltung vom Normalmodus auf den Energiesparmodus und umgekehrt veranlasst oder veranlassen kann.

Ferner kann die Vorrichtung einen Spannungsregler für verschiedene Komponenten der Vorrichtung aufweisen, wobei der Spannungsregler im Energiesparmodus einzelne der Komponenten mit gegenüber dem Normalmodus verringerter Energie, insbesondere auch gar nicht mit Energie versorgt.

### Detaillierte Beschreibung der Erfindung

Die Erfindung wird nachfolgend anhand eines Ausführungsbeispiels sowie unter Bezugnahme auf die Zeichnung näher erläutert. Im Einzelnen zeigen dabei:
- Fig. 1: eine Übersicht über das Gesamtsystem als Blockschaltungsdiagramm,
- Fig. 2: den Zeitverlauf verschiedener Signale des Gesamtsystems gemäß Fig. 1 während eines Messintervalls bzw. während eines Messzyklus und
- Fign. 3 und 4: Diagramme zur Verdeutlichung einer (Auto-)Kalibrierung des Gesamtsystems.

Eine erfindungsgemäße Vorrichtung zur störstrahlungskompensierten Ansteuerung einer Fotodiode und zur Auswertung des Fotostroms weist zwei Anschlüsse auf. Zwischen diesen wird die Empfangsdiode D betrieben. Über die Schaltungsknoten 61,62 wird die Empfangsdiode D von zwei gesteuerten Stromquellen 27,28 bestromt. Hierbei erfassen zwei Verstärker 26,29 die Potenziale auf den von den Anschlüssen ausgehenden Eingangsleitungen 30,31. Ändert sich der Arbeitspunkt der Diode zum Beispiel durch permanente Bestrahlung mit Sonnenlicht, so ändert sich der generierte Fotostrom. Der Spannungsabfall über der Empfangsdiode D ändert sich und die Arbeitspotenziale der Eingangsleitungen 30,31 und damit an den Eingängen der Verstärker 26, 29. Dieses wird durch die Verstärker 26,29 registriert. Diese vergleichen die Potenziale auf den Eingangsleitungen 30,31 jeweils mit einem Referenzpotenzial Refl, Ref2. Die Ausgänge der Verstärker 26,29 regeln die Stromquellen 27,28 nun so nach, dass die Spannungswerte der Eingangsleitungen 30,31 wieder den Vorgaben entsprechen. Koppelkondensatoren 24,25 bilden eine Barriere für die Gleichspannungspegel auf den Eingangsleitungen 30,31 zu nachgeordneten Schaltungen. Die Kondensatoren 24,25 sind auf der den Anschlüssen abgewandten Seite mit den Eingängen zu Messverstärkern 18,19 verbunden. Die Ausgänge 33,34 der Messverstärker 18,19 sind jeweils über einstellbare Kapazitäten 20 bzw. 21 auf ihre Eingänge zurückgekoppelt. Eine Differenzstufe 35 bildet das Differenzsignal 63 der beiden Verstärkerausgangssignale. Im Idealfall soll dieses Signal 63 das Nutzsignal der Fotodiode darstellen.

Wie bereits zuvor beschrieben, führt die oben skizzierte Regelung durch die Verstärker 26,29 der beiden spannungsgesteuerten Stromquellen 27 bzw. 28 und die Änderung der Einstellung der Stromquellen 27,28 zu einer Belastung des Nutzsignals, was die Reichweite massiv einschränkt.

Der erfindungsgemäßen Vorrichtung bzw. dem erfindungsgemäßen Verfahren liegt nun die Erkenntnis zugrunde, dass bei den meisten Anwendungen, insbesondere im Zusammenhang mit einer Gestensteuerung für mobile Geräte, ein permanenter Messbetrieb gar nicht notwendig oder erwünscht ist. Ein solcher Betreib verbraucht Energie, die insbesondere bei mobilen Geräten äußerst "kostbar", weil nur begrenzt verfügbar, ist.

Die Vorrichtung sollte also zeitabhängig in verschiedenen Systemzuständen, d. h. in einzelnen zeitlich getrennten und aufeinanderfolgenden Messintervallen betrieben werden, die jeweils mindestens eine Messphase aufweisen. In diesem Messzustand wird die Nachregelung durch die Stromquellen 27,28 praktisch ausgeschaltet. Einzig die Kondensatoren 24,25 halten die jeweiligen Arbeitspunkte. Dies ist gleichzusetzen mit einer Änderung des Innenwiderstands der Stromquellen 27,28.

Eine solche schlechte (weil "träge") Regelung verhindert aber die Anpassung an eine Fremdlichtbestrahlung. Es ist daher sinnvoll, pro Messintervall einen weiteren Zustand, nämlich eine (Mess-)Vorbereitungsphase zu definieren, in der der Innenwiderstand der Stromquellen 27,28 minimal ist. In diesem Zustand regeln die Stromquellen schnell nach. Ein Nutzsignal würde in der Vorbereitungsphase stark belastet und verfälscht. Daher wird in dieser Vorbereitungsphase noch keine Messung durchgeführt.

In einer nicht gezeigten Sample-and-Hold-Schaltung wird das Ergebnis der jeweiligen Messung typischerweise zwischengespeichert.

Ein Problem, das sich jedoch nun ergibt, besteht darin, dass eine Störung, die während einer Messung auftritt, die Messverstärker 18,19 über- oder untersteuern kann.

Ein solchermaßen gestörtes Messergebnis ist nicht verwendbar. Daher ist es sinnvoll, das Messergebnis quantitativ zu bewerten.

Im einfachsten Fall kann dies beispielsweise dadurch geschehen, dass die Messverstärker 18,19 je ein Signal für Übersteuerung und je ein Signal für Untersteuerung ausgeben. Somit sind 16 Zustände des Systems von zwei Messverstärkern 18,19 mit je zwei Bewertungssignalen möglich. Von diesen sind nicht alle sinnvoll, da beispielsweise eine gleichzeitig auftretende Über- und Untersteuerung nicht realistisch, jedoch trotzdem fehlerhaft ist.

Trotzdem bildet das vier-Bit-Wort, das auf diese Weise gebildet wird, eine quantitative Bewertung jedes Messergebnisses.

Im Gegensatz zum Stand der Technik werden also keine Transimpedanzverstärker, sondern Integratoren, die Teil der besagten Messverstärker 18,19 sind, am Eingang des Systems verwendet.

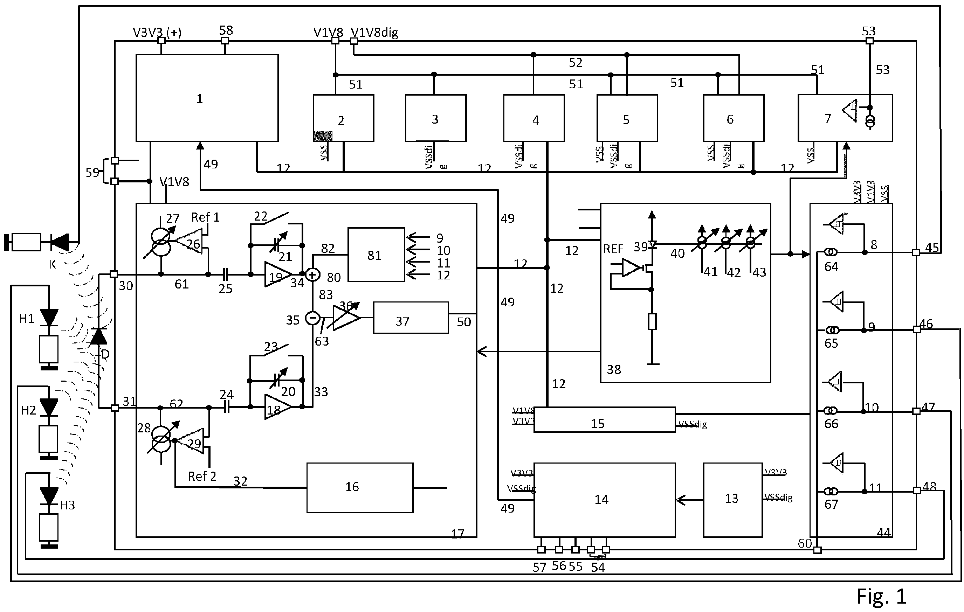

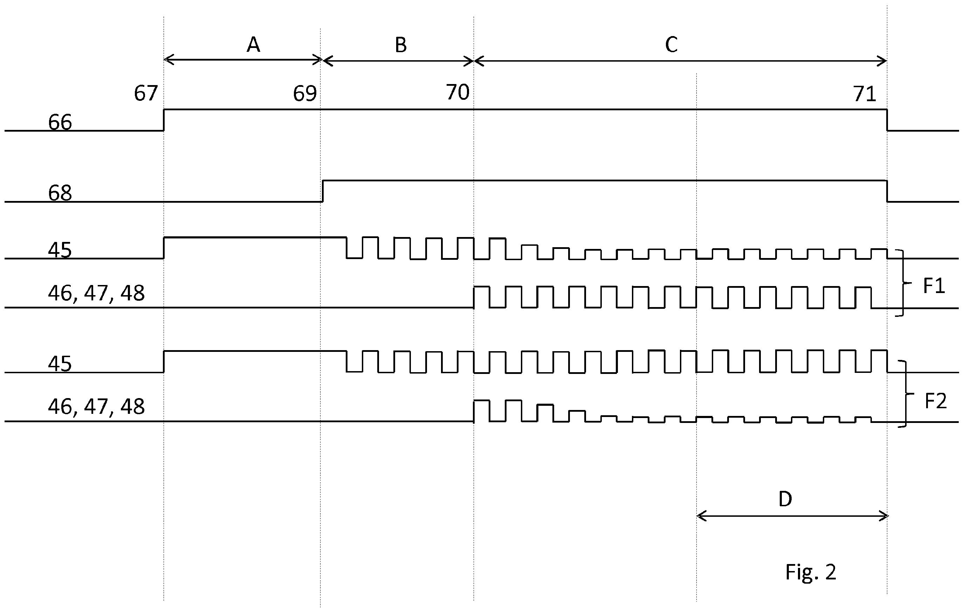

Der Ablauf eines Messintervalls wird beispielsweise durch den Digital-Control-Block 4 des (Block-)Schaltbilds nach Fig. 1 gesteuert. Durch dessen Ablaufsteuerung wird ein Messungsaktivierungssignal "Measure" (Bezugszeichen 66, Fig. 2) zu Beginn der Messung (Bezugszeichen 67, Fig. 2) aktiviert. Damit beginnt die erste Vorbereitungsphase A. In dieser Phase A regeln die Stromquellen 27,28 niederohmig den Arbeitspunkt der Empfangsdiode D nach. Der Ausgang der Stromversorgung für eine Kompensationsdiode K wird aktiv geschaltet. Hierdurch bestrahlt die Kompensationsdiode K bereits die Fotodiode D. Die Kompensationsdiode K wird zunächst nicht moduliert. Durch die Niederohmigkeit der Stromquellen 27,28 kommen die Messverstärker 18,19 schnell in ihre Arbeitspunkte. Die Kapazitäten 20,21 bzw. Koppelkondensatoren 24,25 werden auf ihre Arbeitspegel aufgeladen. Die Stromquellen 64,65, 66,67 für den Betrieb von in diesem Ausführungsbeispiel drei Messsendedioden H1,H2,H3 (wegen der mehrdimensionalen insbesondere 3D-Gestenerkennung) und die Kompensationsdiode K werden auf die jeweiligen Betriebswerte eingestellt.

Am Ende der Phase A zum Zeitpunkt 69 (Fig. 2) wird das Signal "hold" (siehe Bezugszeichen 68, Fig. 2) aktiv. Die spannungsgesteuerten Stromquellen 27,28 gehen von ihren bis dahin eingenommenen niederohmigen in einen hochohmigen Zustand. Damit werden ihre Arbeitspunkte "eingefroren". Zu diesem Zeitpunkt sollte das Differenzsignal 63 der Ausgänge der Messverstärker 18,19 konstant Null sein, da die Arbeitspunkte eingeregelt sind.

Da auch das Umschalten in den hochohmigen Zustand zu Störungen führt, ist es sinnvoll, noch einige Zeit verstreichen zu lassen, bis die eigentliche Messung beginnt. Diese Zeit wird Stabilisierungsphase oder zweite Vorbereitungsphase B (Fig. 2) genannt. Sie endet zum Zeitpunkt 70 (Fig. 2).

Im einfachsten Fall handelt es sich bei den Modulationssignalen 45,46,47,48 für die Kompensationsdiode K bzw. für die Messsendedioden H1,H2,H3 um 180° phasenverschobene Rechtecksignale, die in der Amplitude regelbar sind. (siehe in Messphase C Fig. 2)

Die Messung beginnt, indem z.B. die Abstrahlung der Kompensationsdiode abgeschwächt oder gar ausgeschaltet wird (siehe Bezugszeichen 45 und 69 in Fign. 1 und 2). Gleichzeitig wird typischerweise mindestens eines der Sendesignale (siehe Bezugszeichen 46 und/oder 46 und/oder 47 in Fign. 1 und 2) eingeschaltet. Die typischerweise mindestens eine Messsendediode H1 und/oder H2 und/oder H3 bestrahlt mit Umweg über die zu vermessende Übertragungsstrecke die (Empfangs-)Fotodiode D. Bei mehreren Sendedioden werden diese (z.B. zyklisch) sequentiell angesteuert.

Die Kompensationssendediode K und die typischerweise mindestens eine Messsendediode H1 oder H2 oder H3 werden abwechselnd abgeschwächt bzw. zu verstärkter Abstrahlung veranlasst. Zunächst wird dies zu einer verbleibenden Modulation des Ausgangssignals der Eingangsstufe führen. Nach einer Verstärkung durch einen Verstärker 36 kann das so empfangene modulierte Signal mit einem Demodulator in ein Gleichsignal verwandelt werden. Dies kann zur Regelung der Amplitude der Modulation der einen Messsendediode oder jeweils einer der Sendedioden H1,H2,H3 und/ oder der Amplitude der Modulation der Kompensationsdiode K verwendet werden.

In Fig. 2 wird beispielhaft als Fall F1 eine Regelung der Kompensationsdiode K gezeigt und als Fall F2 eine Regelung der Messsendediode bzw. -dioden H1,H2,H3. Die Regelung kann dabei für die Messsendedioden H1,H2 und H3 unterschiedlich sein. Typischerweise werden darüber hinaus die Messsendedioden H1, H2 und H3 nicht gleichzeitig sondern zeitversetzt betrieben. Dabei können auch mehr als eine Empfangsdiode zum Einsatz kommen. Der Zeitversatz wird dabei typischerweise so gewählt, dass immer nur eine Empfangsdiode D und eine Sendediode H1,H2,H3 gleichzeitig aktiv sind.

Im Folgenden wird die Regelung über die Änderung der Modulationsamplitude der Sendediode H1,H2,H3 erläutert.

Hierbei regelt der so erhaltene Messwert die Amplitude der jeweiligen Messsendediode H1,H2,H3 nach. Es hat sich gezeigt, dass es sinnvoll ist, diesen Wert vor der Gegenkopplung zu verstärken. Dieses Prinzip ist auch aus Operationsverstärkerschaltungen bekannt und dient der Unterdrückung parasitärer Faktoren und Einflüsse. Zum besseren Verständnis sei hier auf die nachfolgend genannten Schriften und Patentanmeldungen verwiesen:
DE-B-103 46 741, EP-A-2 546 620, EP-A-2 356 000, EP-B-1 410 507, EP-B-1 435 509, EP-A-2 418 512, EP-B-1 269 629, DE-A-103 22 552, DE-B-10 2004 025 345, EP-A-2 405 283, DE-C-44 11 773, WO-A-2012/163725, DE-A-2006 020 579, DE-B-10 2005 045 993, EP-B-1 979 764, DE-A-10 2012 024 778, DE-A-10 2013 000 376, DE10 2013 003 791.3, DEA-10 2013 000 380, WO-A-2014/096385, WO-A-2013/124018, DE-B-10 2013 002 304, EP-A-2 624 019, DE-A-10 2012 025 564, DE 10 2013 002 674.1, DE-A-10 2013 222 936, DE-A-10 2012 015 442, DE-A-10 2012 015 423, DE-B-10 2012 024 597, EP-A-2 679 982, EP-A-2 597 482, DE-A-10 2013 002 676, EP-A-2 653 885.

Durch die Regelung stellt sich im Idealfall ein Gleichgewicht ein und das Ausgangssignal 50 des Demodulators 37 stellt nach der besagten Verstärkung ein Maß für die Dämpfung des Sendesignals im Übertragungskanal dar.

Die erfindungsgemäße Steuerung der Stromquellen 27,28 macht sich an den Eingangsleitungen 30,31 in einem Eingangswiderstand dahingehend bemerkbar, dass die Stromquellen in Abhängigkeit von typischerweise mindestens zwei Phasen eines Messzyklus (Bezugszeichen A und C, B und C oder A und B und C der Fig. 2) schwanken.

Natürlich ist die Wirksamkeit der spannungsgesteuerten Stromquellen 27,28 durch die realen Gegebenheiten eingeschränkt. Die Stromquellen 27,28 können nur bis zu einem Maximalstrom versuchen, den jeweils vorgegebenen Spannungspegel zu halten.

Das Messintervall (von Bezugszeichen 67, Fig. 2, bis Bezugszeichen 71, Fig. 2) wird dadurch beendet, dass das "Measure"-Signal (66) am Ende des Messzyklus (siehe Bezugszeichen 71, Fig. 2) wieder inaktiv wird. Alle Sendesignale werden abgeschaltet und das Messergebnis typischerweise beispielsweise in einer (nicht gezeichneten) Sample-and-Hold-Schaltung eingefroren.

Je nach Anwendung ist es sinnvoll, in regelmäßigen Zeitabständen ein derartiges Messintervall (von Bezugszeichen 67, Fig. 2, bis Bezugszeichen 71, Fig. 2) in kürzeren oder längeren Zeitabständen zu wiederholen. Höhere Wiederholfrequenzen für die Messsequenzen haben dabei allerdings eine höhere Stromaufnahme zur Folge.

Als eine weitere Maßnahme zur Verbesserung der optischen Abstandsmessung kann das System in die Lage versetzt sein, zumindest einige und typischerweise jeden Messwert mit einem Qualitätswert der Messung zu versehen, also eine Messsignalqualitätsermittlung durchzuführen. Diese Maßnahme bildet im Rahmen dieser Anmeldung einen selbstständigen Erfindungsgegenstand.

Somit ergibt sich bei mehreren aufeinanderfolgenden Messintervallen eine Folge von Messwerten mit zugehörigen Qualitätswerten, die es einem Messwertschätzer erlauben, einen optimierten Messwert zu schätzen und eine Wahrscheinlichkeit der Korrektheit dieses Messwertes anzugeben. Der daraus resultierende Messwertvektor kann beispielsweise als Basis für die Feature-Extraktion einer Gestenerkennung genutzt werden.

Dies ist insbesondere dann von Nutzen, wenn ein Störer nicht, wie z.B. Sonnenlicht, mit relativ niedriger Frequenz (beispielsweise aufgrund von Abschattung durch z.B. Bäume), sondern wie z.B. bei Leuchtstoffröhren oder bei der Fahrt in einem Cabrio im Sonnenschein unter Bäumen hindurch relativ schnell moduliert wird. Selbst wenn die Störungsfrequenz in der Nähe der Modulationsfrequenz der Messsendedioden H1,H2,H3 und des Kompensationssenders K liegt, wird diese Frequenz in der Regel nicht korrekt getroffen. Es kommt zu einer Schwebung im Regelsignal, die erkannt und genutzt werden kann. Die Qualität der Messung wird typischerweise mit der Schwebungsfrequenz zeitabhängig schwanken. Da das System infolge der Bewertung der Messergebnisse nur solche Messwertsequenzen auswertet, die relativ ungestört sind, kommt es de facto somit automatisch zu einer Abtastung des Messsignals nur zu relativ ungestörten Zeiten. Darüber hinaus ist es denkbar, dass nicht nur als gestört erkannte Messwerte verworfen werden, sondern auch solche, für die ein Schätzer eine hohe Störungswahrscheinlichkeit ermittelt. Dies können beispielsweise direkt vorausgehende oder direkt folgende Messwerte sein. Auch sollte ein solches Messsystem Gegenmaßnahmen bei erkannten Störungen einleiten.

Hierzu gehört beispielsweise eine Änderung der Messfrequenz. Dies kann sowohl die Wiederholfrequenz der Messintervalle als auch die Modulationsfrequenz der Messsendedioden H1,H2,H3 und der Kompensationssendediode K betreffen. Auch kann die Schaltung anders parametrisiert werden. Beispielsweise können die Zeitkonstanten der als Integratoren wirkenden Messverstärker 18,19 geändert werden, indem die Kapazitäten 20,21 veränderbar sind. Im Extremfall können die Integratoren durch Überbrückung ihrer Kapazitäten 20,21 mit Hilfe der programmierbaren Schalter 22,23 überbrückt werden. Es kommt also, wie man an diesem Beispiel sieht, auch eine Änderung der System- oder Schaltungstopologie in Frage. Die Integratoren werden dann zu reinen Impedanzwandlern.

Eine weitere Verbesserung der Vorrichtung kann also durch eine Beurteilung der Qualität des Messsignals und/oder durch eine Regelung zur Optimierung der Messergebnisse erreicht werden. Im Allgemeinen wird die Rückkopplungsschleife durch Software geschlossen, da die Regelalgorithmen sehr stark applikationsabhängig sind.

Als Stellglied für diese Messsignalqualitätsregelung dient typischerweise eine Änderung der Systemparameter und/oder der Systemtopologie oder -struktur.

Eine weitere Möglichkeit, die in die Qualitätsbewertung eines Messergebnisses einfließen kann, ist die Auswertung der Stromquellen-Ströme. Hierzu wird im Block 16 ("Extrinsic Light Measurement" bzw. "Messung des äußeren Lichtes") zeitabhängig der Strom gemessen, den die Stromquelle oder Stromquellen 27,28 liefern. Diese Messergebnisse können der Software zur Verfügung gestellt werden. Diese kann beispielsweise durch eine Fourier-Transformation die Störfrequenzen bestimmen, die das Messsignal stören. Es ist besonders vorteilhaft, die Modulationsfrequenz der Messsendedioden H1,H2,H3 und der Kompensationsdiode K und die Wiederholfrequenz der Messintervalle (Bezugszeichen 67, Fig. 2, bis Bezugszeichen 71, Fig. 2) jeweils so zu wählen, dass sie mit den Störfrequenzen möglichst nicht interferieren. Somit kann beispielsweise durch "Frequency-Hopping" die Störsignal-Robustheit angehoben werden.

Des Weiteren ist es denkbar, statt eines monofrequenten Sendesignals ein bandbegrenztes Signal zu verwenden und so schmalbandige Störer durch ein Spread-Spectra-Verfahren in ihrem Einfluss auf das Messergebnis zu reduzieren. Solche möglichen Sendesignale sind beispielsweise geeignete Pseudozufallsfolgen (siehe hierzu auch EP-A-2 631 674) Eine weitere einen selbstständigen Erfindungsgedanken repräsentierende Maßnahme ist die Einführung und/oder Anhebung einer Schwelle für die Erkennung der Annäherung eines Objekts an die Messsendedioden H1,H2,H3/Empfangsdiode D. Hierbei handelt es sich um eine nichtlineare Filterfunktion, die typischerweise in dem Block 37 der Fig. 1 realisiert ist, aber auch in einer nachfolgenden Verarbeitungsstufe realisiert sein kann. Dabei werden alle Messwerte unterhalb oder oberhalb einer Schwelle beispielsweise auf einen vordefinierten Wert fixiert.

Schließlich kann aufgrund der Messungen ein rechnerisches Modell eines Störers parametrisiert werden und Zeitpunkte und Einstellungsparameter für das Messsystem prognostiziert werden, bei und mit denen das nächste Messintervall mit einer besonders guten Qualität durchgeführt werden kann. Nachfolgend soll auf eine weitere Besonderheit der Schaltung nach Fig. 1 eingegangen werden, bei der es sich um einen weiteren selbstständigen Erfindungsgedanken handelt.

Gerade für mobile Anwendungen ist es besonders wichtig, möglichst wenig Energie zu verbrauchen. Daher ist es besonders günstig, wie oben beschrieben, die Messsendedioden bzw. eine der Messsendedioden H1,H2,H3 und nicht die Kompensationsdiode K zu modulieren und das System nur bei Bedarf zu betreiben. Um die erforderliche Betriebsenergie weiter zu reduzieren, ist es sinnvoll, das System nicht zu betreiben, wenn es beispielsweise komplett abgeschattet ist. Dies ist beispielsweise bei einem Einsatz in einem Mobiltelefon dann der Fall, wenn der Nutzer sich das Telefon zum Telefonieren an das Ohr hält. Für die Erkennung derartiger Nutzungssituationen ist es daher sinnvoll, einen weiteren, typischerweise passiven Sensor vorzusehen, der beispielsweise durch Messung des Umgebungslichts die Nutzungssituation vorklassifizieren kann. Auch hier ist ggf. der Einsatz einer innenwiderstandsmodulierten Störstrahlungs-Kompensationsschaltung sinnvoll, wenn modulierte Signale erkannt werden sollen. Die Schaltung gemäß Fig. 1 verfügt über eine solche Schnittstelle 53 (siehe in Fig. 1 oben rechts), die mit einer entsprechenden Eingangs-Hardware 7 versehen ist.

Darüber hinaus ist es sinnvoll, das ganze System in einen Energiesparmodus zu versetzen, um den Energieverbrauch noch weiter zu reduzieren. Hierbei muss beachtet werden, dass moderne integrierte Schaltungen typischerweise intern mit einer niedrigeren Spannung betrieben werden, als ihre Peripherie. Insoweit ist ein Spannungsregler 1 von Vorteil, der die internen Betriebsspannungen bereitstellt. Dieser Spannungsregler 1 verbraucht im Energiesparmodus unnötig Energie. Es ist daher sinnvoll, einen möglichst kleinen Teil (siehe Funktionsblock 14) der Schaltung so zu realisieren, dass er direkt mit der Betriebsspannung betrieben werden kann. Dieser Funktionsblock 14 hat einzig die Aufgabe, über eine Schnittstelle 54 bis 57 die Minimalkommunikation zum Hauptprozessor, mit dem das Messsystem kommuniziert, sicherzustellen. Die Schnittstelle weist beispielsweise eine serielle TX- und RX-Zweidraht-Leitung oder eine I²C-Bus-Schnittstelle 54, einen Interrupt-Ausgang 55 für den Hauptprozessor, der auf einem definierten Potenzial liegen muss, einen nicht maskierbaren Messsystem-Reset 56 und einer Referenzspannungseingang 57 auf. Alle anderen Systeme sind ausgeschaltet. Wenn möglich wird auch der normale Systemoszillator 6 abgeschaltet und stattdessen dieser Funktionsblock 14 der Schaltung mit einer niedrigen Frequenz aus einem Minimaloszillator 5 versorgt. Dieser ist wesentlich kleiner, da er nicht den gesamten IC treiben muss.

Somit sind im Energiesparmodus nur die Standard-Blöcke 14 und 6 aktiv. Ausgeschaltet ist insbesondere die Band-Gap-Referenz 2, der Block 4 (Digital-Control), der Spannungsregler 1 und alle Messverstärker und Empfangs- und Sendeeinrichtungen.

Handelt es sich bei der Schnittstelle 54 beispielsweise um eine I²C Schnittstelle, so ist es sinnvoll, den Funktionsblock 14 so zu gestalten, dass er nur einen ganz bestimmten Befehl auf dem Bus erkennen kann, der an eine ganz genau vorgegebene Registeradresse gesendet wird.

Ein solches Protokoll kann beispielsweise so aussehen, dass der Funktionsblock 14 eine Sequenz aus einem Start-Bit sowie der Slave-Adresse und aus einem Bit zur Signalisierung eines Schreibzugriffs erkennt und daraufhin ein Acknowledge-Bit ausgibt, woraufhin der Hauptprozessor die Registeradresse sendet, der Funktionsblock 14 ein Acknowledge-Bit sendet und der Hauptprozessor daraufhin ein Parity-Bit sendet. Hat der Funktionsblock 14 alle diese Daten als korrekt erkannt, werden der Spannungsregler, die Bandgap-Referenz 2 und alle anderen Teile der Schaltung in einer vordefinierten Sequenz nacheinander und/oder parallel, je nach Typ und Erfordernis, hochgefahren. Die normale I²C-Bus Kommunikation wird dann durch den Block 4 (Digital Control) wieder bis zu einem nächsten Einschlafbefehl übernommen. Nach Empfang eines solchen Einschlafbefehls veranlasst der Block 4 (Digital control) die wesentlichen Teile des Messsystems, in den Energiesparmodus überzugehen. Der letzte Teil der Abschaltsequenz muss jedoch vom Funktionsblock 14 gesteuert werden. Dies betrifft insbesondere die Abschaltung der Energieversorgung durch Abschaltung des Spannungsreglers 1, des Oszillators 6 und des Blocks 4 (Digital Control) selbst.

Es ist weiter sinnvoll, wenn der Funktionsblock 14 über einen internen Zeitgeber verfügt, der in regelmäßigen Abständen das System aufwecken kann, ohne dass es dazu des Empfangs eines Befehls des Hauptprozessors über die Schnittstelle 54 bedarf.

Es kann sinnvoll sein, wenn das System nach Durchführung von bezüglich Anzahl und Art vordefinierten Messungsintervallen wieder in den Energiesparmodus wechselt, ohne dass es hierzu eines gesonderten Befehls des Hauptprozessors über die Schnittstelle 54 von außen bedarf.

Hierbei ist es sinnvoll, wenn die Messwerte und vorzugsweise auch die Messwertqualitäten in einem (nicht gezeigten) Speicher abgelegt werden. Zu den dort abgelegten Messwerten können auch Konfigurationsdaten des Systems zählen (beispielsweise mit welchem der Sendedioden H1,H2,H3, mit welcher der Kompensationsdiode K und mit welcher Empfangsdiode D wann und mit welcher Qualität Messwerte aufgenommen wurden. Auch können dort die Messergebnisse weiterer Messignalbewertungsblöcke wie beispielsweise des Blocks 16 (Extrinsic Light Measurement) abgelegt werden.

Im normalen Messbetrieb darf aber trotz des Energiesparmodus keine Energie "verschwendet" werden. Daher kann beispielsweise die Bandgap-Referenz 2, die ja nur eine Referenzspannung für die Verwendung an verschiedenen Stellen im Messsystem liefert, zeitweise abgeschaltet werden, wenn deren Spannung beispielsweise in einer Sample-and-Hold-Schaltung zwischengespeichert und gepuffert ist. Die Bandgap-Schaltung wird dann nur zum Erneuern der unweigerlich langsam abfließenden Ladungen aus dem Speicherelement der Sample-and-Hold-Schaltung (typischerweise ein Kondensator) von Zeit zu Zeit angeschaltet.

Ein weiteres selbstständig erfindungswesentliches Merkmal der Vorrichtung ergibt sich aus der notwendigen Kalibration des Messsystems.

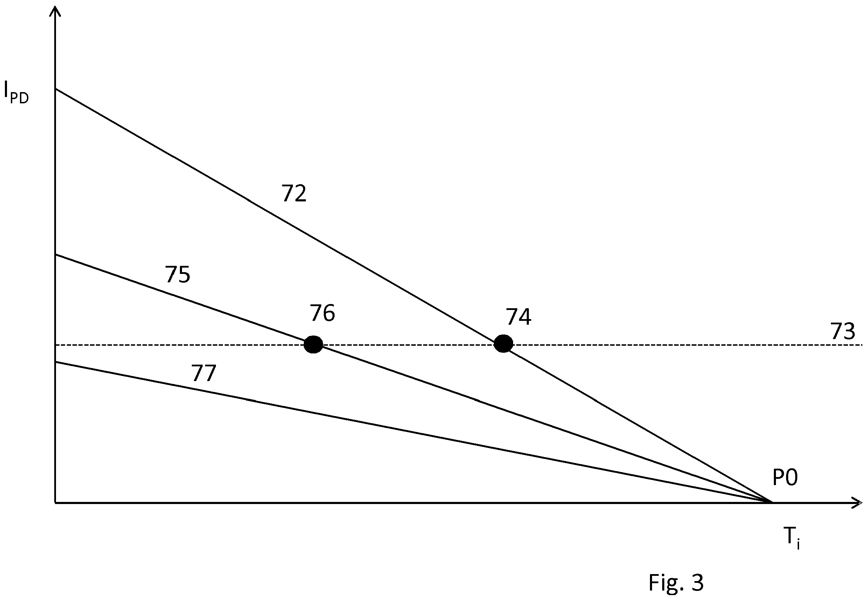

Hierzu ist in Fig. 3 die Regelcharakteristik des Systems bei Regelung der Sendediodenamplitude Tᵢ dargestellt. Die Amplitude des auf die jeweilige Messsendediode H1,H2,H3 zurückzuführenden Anteils (siehe 72,75,77 in Fig. 3) des Fotostroms I_{PD} in der/einer Empfangsdiode D hängt dabei von der Sendediodenamplitude Tᵢ ab. Die Amplitude des auf die Kompensationsdiode K bzw. jeweilige Kompensationsdiode K zurückzuführenden Anteils (siehe Linie 73 in Fig. 3) des Fotostroms I_{PD} in der/einer Empfangsdiode D hängt im Gegensatz dazu von der Senderamplitude Tᵢ nicht ab.

Wenn der Regler eingeschwungen ist, ist das Differenzsignal 63 ein Gleichsignal. Der auf das Sendesignal zurückzuführende Anteil ist dann im Differenzsignal 63 Null. Die maximale Distanz, ab der ein sich der Empfangsdiode näherndes Objekt bzw. bis zu der sich ein von der Empfangsdiode entfernendes Objekt noch erkannt werden kann, ist bestimmt durch die Regelcharakteristik und/oder Tatsache, dass bei maximaler Amplitude des Sendediodensignals von dem Objekt noch ein so großer Anteil des Sendediodensignals reflektiert wird, dass an der Empfangsdiode ein Signal mit mindestens der Amplitude des Kompensationsdiodensignals empfangen wird. Für einen großen Fotostrom 72, der gleichbedeutend mit einem nahen Objekt ist (und damit für eine steile Regelcharakteristik), ergibt sich dabei als Schnittpunkt mit 73 ein erster Arbeitspunkt 74. Für einen niedrigeren Fotostrom 75 (und damit bei flacherer Regelcharakteristik) ein weiterer zweiter Arbeitspunkt 76. Bei sehr weit entfernten Objekten kann das rückgestrahlte Licht aber so gering werden, dass sich überhaupt kein Arbeitspunkt mehr ergeben kann. Die Regelcharakteristik im Falle des Fotostroms 77 ist dann so flach, dass sich keine Kreuzung mehr mit der Linie 73 ergibt, die die Amplitude der Kompensationsdiode K repräsentiert, so dass keine sinnvolle Regelung möglich ist.

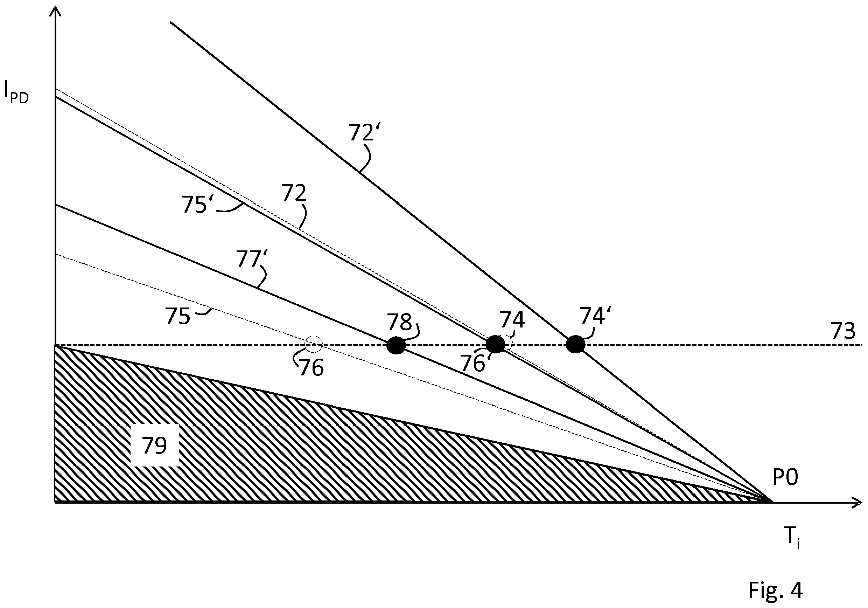

Hier bestehen nun zwei Möglichkeiten: Entweder wird das Kompensationsdiodensignal bei derartig schwachen Empfängersignalen herunter geregelt, was eine Mischregelung entspricht und einen höheren Schaltungsaufwand zu Folge hat, aber durchaus erfolgreich realisiert werden kann, oder zu dem Empfängersignal wird ein zum Sendesignal synchrones Offset-Signal hinzuaddiert, was die Arbeitspunkte 74,76 allesamt durch Dreh-Streckung um den Punkt P0 verschiebt (siehe 74',76' in Fig. 4) und einen neuen Arbeitspunkt 78 für den neuen Fotostrom 77' entstehen lässt. Das Offset-Signal führt zu einem nicht mehr erreichbaren Bereich 79 in dem Diagramm der Fig. 4. Die Erzeugung dieses Offset-Signals ist in Fig. 1 durch einen Kalibrationsblock 81 angedeutet, der für die jeweilige Sender-/Empfängerkombination aus den Sendersignalen 9 bis 12 das Offset-Signal 82 erzeugt, woraus das Signal 82 durch Addition erzeugt wird.

Für die Kalibration eines Gesamtsystems, die Teil das hier beschriebene System ist und einen weiteren selbstständigen erfindungsgemäßen Gedanken bildet, wird nun in einem definierten Messaufbau dieses Gesamtsystem vermessen. Das Gesamtsystem unterscheidet sich vom dem Messsystem beispielsweise dadurch, dass es neben dem Messsystem noch optische Elemente wie Spiegel, Blenden etc. und natürlich das Gehäuse umfasst.

Für die Kalibration wird die Kompensationsdiode K auf einen statischen Pegel geschaltet. Die Kopplung zwischen Empfangsdiode D und Kompensationsdiode K ist erfahrungsgemäß nur sehr schwer zu stabilisieren. Daher ist die Kopplung stets als für einen Applikationstyp gleich, aber von Applikation zu Applikation innerhalb des desselben Typs schwankend anzunehmen.

Die Kalibration erfolgt nun so, dass die schaltbaren Referenzstromquellen 41,42,43 vorgesehen werden, mit denen die Referenzstromversorgung 38 nun so eingestellt wird, dass der gemessene Fotostrom auf stets einen gleichen, applikationsspezifisch vorgegeben Wert eingestellt wird. Hierdurch kann die Ordinaten-Position der Linie 73 in den Fign. 3 und 4 vorgegeben werden. Somit wird sichergestellt, dass ein Arbeitspunkt gefunden wird. Dieser Arbeitspunkt wird dabei typischerweise in der Art eingestellt, dass der Kompensationssendediodenstrom so lange erhöht wird, bis das Kompensationssignal oberhalb des Systemrauschens messbar wird. Anschließend wird das Offset-Signal auf einen solchen Wert eingestellt, dass der unterste Arbeitspunkt eingenommen wird.

### BEZUGSZEICHENLISTE

- 1: Spannungsregler
- 2: Bandgap-Referenz
- 3: Funktionsblock
- 4: Digital-Control-Block
- 5: Minimaloszillator
- 6: Systemoszillator
- 7: Eingangs-Hardware
- 8: Signalleitung
- 9: Signalleitung
- 10: Signalleitung
- 11: Signalleitung
- 14: Funktionsblock
- 16: Funktionsblock
- 17: Ansteuer-/Auswerteeinheit
- 18: Messverstärker
- 19: Messverstärker
- 20: Kapazitäten
- 21: Kapazitäten
- 22: Schalter
- 23: Schalter
- 24: Koppelkondensatoren
- 25: Koppelkondensatoren
- 26: Verstärker
- 27: Stromquelle
- 28: Stromquelle
- 29: Verstärker
- 30: Eingangsleitung
- 31: Eingangsleitung
- 33: Ausgang
- 34: Ausgang
- 35: Differenzstufe
- 36: Verstärker
- 37: Demodulator
- 38: Referenzstromversorgung
- 41: Referenzstromquelle
- 42: Referenzstromquelle
- 43: Referenzstromquelle
- 45: Modulationssignal
- 46: Modulationssignal
- 47: Modulationssignal
- 48: Modulationssignal
- 50: Ausgangssignal
- 53: Schnittstelle
- 54: RX-Zweidraht-Leitung der Schnittstelle
- 55: Interrupt-Ausgang der Schnittstelle
- 56: Messsystem-Reset der Schnittstelle
- 57: Referenzspannungseingang der Schnittstelle
- 61: Schaltungsknoten
- 62: Schaltungsknoten
- 63: Differenzsignal
- 64: Stromquelle
- 65: Stromquelle
- 66: Stromquelle
- 67: Stromquelle
- 69: Zeitpunkt
- 70: Zeitpunkt
- 72: Fotostrom
- 73: Amplitude der Kompensationsdiode repräsentierende Linie
- 74: Arbeitspunkt
- 75: Fotostrom
- 76: Arbeitspunkt
- 77: Fotostrom
- 77': Fotostrom
- 78: Arbeitspunkt

- 79: Bereich
- 81: Kalibrationsblock
- 82: Offset-Signal
- H1: Messsendediode
- H2: Messsendediode
- H3: Messsendediode
- P0: Punkt
- Ref1: Referenzpotenzial
- Ref2: Referenzpotenzial

- A: erste Vorbereitungsphase des Messintervalls
- B: zweite Vorbereitungsphase des Messintervalls
- C: Messphase des Messintervalls
- D: Empfangsdiode
- K: Kompensationsdiode

## Patentansprüche

1. Störstrahlungskompensierte Vorrichtung zur Vermessung einer optischen Signalübertragungsstrecke während einer Vielzahl von intermittierend aufeinanderfolgenden Messintervallen mit Messpausen zwischen den Messintervallen,
insbesondere für die Erkennung eines Objekts
und/oder für die Erkennung einer Bewegung und/oder Bewegungsrichtung eines Objekts, mit
- mindestens einem Messsender (H1,H2,H3) zum Senden eines optischen Messsignals,
- mindestens einem Empfänger (D) zum Empfangen eines optischen Signals, wobei der mindestens eine Empfänger (D) einer Störstrahlung z.B. aus der Umgebung ausgesetzt ist,
- einer Ansteuer- und Auswerteeinheit (17) zur Ansteuerung des mindestens einen Messsenders (H1,H2,H3) und des mindestens einen Empfängers (D) zwecks Sendens bzw. Empfangens eines optischen Signals während einer Messphase (C) eines Messintervalls und zur Auswertung des empfangenen optischen Messsignals durch Verarbeitung eines elektrischen Signals, das an einem elektrisch mit dem mindestens einen Empfänger (D) gekoppelten ersten Schaltungsknoten (61,62) ansteht, und
- mindestens einer mit dem ersten Schaltungsknoten (61,62) gekoppelten ersten Störstrahlungs-Kompensationseinheit (26,27,28,29) zur elektrischen Vorspannung des mindestens einen Empfängers (D) durch Bereitstellen eines ersten Kompensationsstroms mit einer Größe, die im Wesentlichen gleich der Größe eines in Folge der Störstrahlung von dem mindestens einen Empfänger (D) erzeugten Störsignals ist,
- wobei die mindestens eine erste Störstrahlungs-Kompensationseinheit (26,27,28,29) einen variablen Innenwiderstand aufweist,
**dadurch gekennzeichnet ,**
- **dass** die Ansteuer- und Auswerteeinheit (17) den Innenwiderstand der mindestens einen ersten Störstrahlungs-Kompensationseinheit (26,27,28,29) zur während einer ersten Vorbereitungsphase (A) eines Messintervalls vor dessen Messphase (C) erfolgenden Einstellung eines Kompensationsstroms, der dem aufgrund der aktuellen Störstrahlung vom Empfänger gelieferten Störsignal im Wesentlichen gleicht, für die Dauer der Vorbereitungsphase (A) auf einen niedrigeren ersten Widerstandswert und zur während der Messphase (C) erforderlichen Aufrechterhaltung des Kompensationsstroms für die Dauer der Messphase (C) auf einen höheren zweiten Widerstandswert einstellt.

2. Störstrahlungskompensierte Vorrichtung nach Anspruch 1, **dadurch gekennzeichnet, dass** der mindestens eine Empfänger (D) zwischen dem ersten Schaltungsknoten (61,62) und einem zweiten Schaltungsknoten (61,62), mit denen er jeweils elektrisch gekoppelt ist, geschaltet ist, wobei die mindestens eine erste Störstrahlungs-Kompensationseinheit (26,27) mit dem ersten Schaltungsknoten (61, 62) gekoppelt ist, dass die an und/oder zwischen diesen Schaltungsknoten (61,62) anstehenden elektrischen Signale der Ansteuer- und Auswerteinheit (17) zuführbar sind und dass mindestens eine zweite Störstrahlungs-Kompensationseinheit (28,29) mit variablem Innenwiderstand vorhanden ist, die einen zweiten Kompensationsstrom bereitstellt, welcher im Wesentlichen gleich dem ersten Kompensationsstrom ist, und dass die Ansteuer- und Auswerteeinheit (17) den Innenwiderstand der zweiten Störstrahlungs-Kompensationseinheit (28,29) während eines Messintervalls in im Wesentlichen gleicher Weise wie den Innenwiderstand der ersten Störstrahlungs-Kompensationseinheit (27,28) steuert.

3. Störstrahlungskompensierte Vorrichtung nach Anspruch 1 oder 2, **dadurch gekennzeichnet, dass** mindestens ein Kompensationssender (K) zum Senden eines optischen Kompensationssignals vorhanden ist, dem der mindestens eine Empfänger (D) ausgesetzt ist, dass die Ansteuer- und Auswerteeinheit (17) den mindestens einen Kompensationssender (K) zwecks Sendens des optischen Kompensationssignals während einer sich an die erste Vorbereitungsphase (A) anschließenden und der Messphase (C) vorgelagerten zweite Vorbereitungsphase (B) eines Messintervalls ansteuert und dass die Ansteuer- und Auswerteeinheit (17) den Innenwiderstand der mindestens einen ersten Störstrahlungs-Kompensationseinheit (26,27) und, sofern vorhanden, der mindestens einen zweiten Störstrahlungs-Kompensationseinheit (28,29) für die Dauer der zweiten Vorbereitungsphase (B) eines Messintervalls auf einen Widerstandswert einstellt, der kleiner als der zweite Widerstandswert ist.

4. Störstrahlungskompensierte Vorrichtung nach einem der Ansprüche 1 bis 3, **dadurch gekennzeichnet, dass** der mindestens eine Messsender (H1,H2,H3) und/oder der mindestens eine Kompensationssender (K) zumindest während der Messphase (C) modulierte optische Signale aussendet/aussenden.

5. Störstrahlungskompensierte Vorrichtung nach Anspruch 4, **dadurch gekennzeichnet, dass** zumindest Anteile des Kompensationssignals komplementär, d.h. gegenphasig bzw. um 180° phasenverschoben zum Messsignal sind.

6. Störstrahlungskompensierte Vorrichtung nach einem der Ansprüche 3 bis 5, **dadurch gekennzeichnet, dass** zumindest Anteile des Messsignals und des Kompensationssignals einander überlagernd, insbesondere addierend oder multiplizierend von dem mindestens einen Empfänger (D) empfangen werden.

7. Störstrahlungskompensierte Vorrichtung nach einem der Ansprüche 1 bis 6, **dadurch gekennzeichnet, dass** die mindestens eine Störstrahlungs-Kompensationseinheit (26,27,28,29) als eine spannungsgesteuerte Stromquelle, als ein Gyrator, als eine variable Impedanz, als ein variabler Widerstand oder als eine variable Induktivität ausgebildet ist.

## Claims

1. An interference-radiation-compensated device for measuring an optical signal transmission path during a plurality of intermittently successive measurement intervals with measurement pauses between the measurement intervals, particularly for detection of an object and/or detection of a movement and/or movement direction of an object, comprising
- at least one measurement transmitter (H1,H2,H3) for transmitting an optical measurement signal,
- at least one receiver (D) for receiving an optical signal, wherein the at least one receiver (D) is exposed to interference radiation e.g. from the ambience,
- a driving and evaluating unit (17) operative to drive the least one measurement transmitter (H1,H2,H3) and the at least one receiver (D) for transmitting and respectively receiving an optical signal during the measurement phase (C) of a measurement interval and for evaluation of the received optical measurement signal by processing an electric signal at a first node (61,62) coupled to the at least one receiver (D), and
- at least one first interference-radiation compensation unit (26,27, 28,29) coupled to the first node (61,62), for electrically biasing the at least one receiver (D) by providing a first compensation current of an amount substantially identical to the amount of an interference signal generated as a result of the interference radiation from the at least one receiver (D),
- wherein the at least one first interference-radiation compensation unit (26,27,28,29) comprises a variable internal resistance,
**characterized in**
- **that** the driving and evaluating unit (17) is operative, for the purpose of setting a compensation current that is performed during a first preparation phase (A) of a measurement interval prior to its measurement phase (C), the compensation current being substantially equal to the interference signal supplied by the receiver due to the current interference signal, to set the inner resistance of the least one first interference-radiation compensation unit (26,27,28,29) to a lower first resistance value for the duration of the preparation phase (A) and, for maintaining the compensation current as required during the measurement phase (C), to set said inner resistance to a higher second resistance value for the duration of the measurement phase (C).

2. The interference-radiation-compensated device according to claim 1, **characterized in that** the at least one receiver (D) is connected between the first node (61,62) and a second node (61,62), with the receiver being respectively coupled to said nodes, wherein the at least one first interference-radiation compensation unit (26,27) is coupled to the first node (61,62), that the electric signals at and/or between these nodes (61,62) can be supplied to the driving and evaluating unit (17) and that at least one second interference-radiation compensation unit (28,29) with variable internal resistance is installed, being operative for the provision of a second compensation current which is substantially equal to the first compensation current, and that the driving and evaluating unit (17) is operative to control the internal resistance of the second interference-radiation compensation unit (28,29) during a measurement interval in substantially the same manner as the internal resistance of the first interference-radiation compensation unit (27,28).

3. The interference-radiation-compensated device according to claim 1 or 2, **characterized in that** at least one compensation transmitter (K) is provided for transmitting an optical communication signal to which the at least one receiver (D) is subjected, that the driving and evaluating unit (17) is operative to drive the at least one compensation transmitter (K) for transmission of the optical communication signal during a second preparation phase (B) of a measurement interval that follows the first preparation phase (A) and precedes the measurement phase (C), and that the driving and evaluating unit (17) is operative to set the internal resistance of the at least one first interference-radiation compensation unit (26,27) and, if existent, of the at least one second interference-radiation compensation unit (28,29) to a resistance value smaller than the second resistance value for the duration of the second preparation phase (B) of a measurement interval.

4. The interference-radiation-compensated device according to any one of claims 1 to 3, **characterized in that** the at least one measurement transmitter (H1,H2,H3) and/or the at least one compensation transmitter (K) is/are operative to transmit modulated optical signals at least during the measurement phase (C).

5. The interference-radiation-compensated device according to claim 4, **characterized in that** at least portions of the compensation signal are complementary, i.e. are in reverse phase relation and respectively phase-shifted by 180°, relative to the measurement signal.

6. The interference-radiation-compensated device according to any one of claims 3 to 5, **characterized in that** at least portions of the measurement signal and of the compensation signal are received by the at least one receiver (D) with mutual overlap, particularly in added or multiplied form.

7. The interference-radiation-compensated device according to any one of claims 1 to 6, **characterized in that** the at least one first interference-radiation compensation unit (26,27,28,29) is configured as a voltage-controlled power source, as a gyrator, as a variable impedance, as a variable resistor or as a variable inductance.

## Revendications

1. Dispositif à compensation de rayonnement parasite pour mesurer un trajet de transmission optique pendant une pluralité d'intervalles de mesure se succédant de façon intermittente, des pauses de mesure étant prévues entre les intervalles de mesure, en particulier pour la détection d'un objet et/ou pour la détection d'un mouvement et/ou d'une direction de déplacement d'un objet, comprenant :
- au moins un émetteur (H1, H2, H3) pour émettre un signal de mesure optique,
- au moins un récepteur (D) pour recevoir un signal optique, le au moins un récepteur (D) étant exposé à un rayonnement parasite provenant, par exemple, de l'environnement,
- une unité de commande et d'évaluation (17) qui commande le au moins un émetteur de mesure (H1, H2, H3) et le au moins un récepteur (D) pour l'émission ou la réception d'un signal optique pendant une phase de mesure (C) d'un intervalle de mesure et qui évalue le signal de mesure optique reçu par le traitement d'un signal électrique présent au niveau d'un premier noeud de commutation (61, 62) couplé électriquement au au moins un récepteur (D), et
- au moins une première unité de compensation de rayonnement parasite (26, 27, 28, 29) couplée au premier noeud de commutation (61, 62) pour la polarisation électrique du au moins un récepteur (D) en délivrant un premier courant de compensation d'une grandeur sensiblement égale à la grandeur d'un signal parasite généré par le au moins un récepteur (D) en raison du rayonnement parasite,
- la au moins une première unité de compensation de rayonnement parasite (26, 27, 28, 29) présentant une résistance interne variable,
**caractérisé en ce que**
l'unité de commande et d'évaluation (17) ajuste la résistance interne de la au moins une première unité de compensation de rayonnement parasite (26, 27, 28, 29) à une première valeur de résistance relativement faible pour le réglage, intervenant pendant une première phase de préparation (A) d'un intervalle de mesure avant la phase de mesure (C) de celui-ci, d'un courant de compensation qui est sensiblement égal au signal parasite délivré par le récepteur en raison du rayonnement parasite en cours, pour la durée de la phase de préparation (A), et à une seconde valeur de résistance plus élevée pour le maintien, nécessaire pendant la phase de mesure (C), du courant de compensation pour la durée de la phase de mesure (C).

2. Dispositif à compensation de rayonnement parasite selon la revendication 1, **caractérisé en ce que** le au moins un récepteur (D) est monté entre le premier noeud de commutation (61, 62) et un second noeud de commutation (61, 62) auxquels il est respectivement couplé électriquement, la au moins une première unité de compensation de rayonnement parasite (26, 27) étant couplée au premier noeud de commutation (61, 62), **en ce que** les signaux électriques présents au niveau de et/ou entre lesdits noeuds de commutation (61, 62) peuvent être acheminés à l'unité de commande et d'évaluation (17) et **en ce qu'**est prévue au moins une seconde unité de compensation de rayonnement parasite (28, 29) pourvue d'une résistance interne variable, qui délivre un second courant de compensation qui est sensiblement identique au premier courant de compensation, et **en ce que** l'unité de commande et d'évaluation (17) commande la résistance interne de la seconde unité de compensation de rayonnement parasite (28, 29) pendant un intervalle de mesure d'une manière sensiblement identique à la résistance interne de la première unité de compensation de rayonnement parasite (27, 28).

3. Dispositif à compensation de rayonnement parasite selon la revendication 1 ou 2, **caractérisé en ce qu'**est prévu au moins un émetteur de compensation (K) pour l'émission d'un signal de compensation optique, auquel est exposé le au moins un récepteur (D), **en ce que** l'unité de commande et d'évaluation (17) commande le au moins un émetteur de compensation (K) pour l'émission du signal de compensation optique pendant une seconde phase de préparation (B) d'un intervalle de mesure, faisant suite à la première phase de préparation (A) et en amont de la phase de mesure (C), et **en ce que** l'unité de commande et d'évaluation (17) ajuste la résistance interne de la au moins une première unité de compensation de rayonnement parasite (26, 27), et le cas échéant, de la au moins une seconde unité de compensation de rayonnement parasite (28, 29) à une valeur de résistance qui est inférieure à la seconde valeur de résistance pour la durée de la seconde phase de préparation (B) d'un intervalle de mesure.

4. Dispositif à compensation de rayonnement parasite selon l'une des revendications 1 à 3, **caractérisé en ce que** le au moins un émetteur de mesure (H1, H2, H3) et/ou le au moins un émetteur de compensation (K) émet et/ou émettent des signaux optiques modulés au moins pendant la phase de mesure (C).

5. Dispositif à compensation de rayonnement parasite selon la revendication 4, **caractérisé en ce qu'**au moins des composantes du signal de compensation sont complémentaires, c-à-d. en opposition de phase ou en décalage de phase de 180° par rapport au signal de mesure.

6. Dispositif à compensation de rayonnement parasite selon l'une des revendications 3 à 5, **caractérisé en ce qu'**au moins des composantes du signal de mesure et du signal de compensation sont reçues par le au moins un récepteur (D) par superposition, en particulier par addition ou par multiplication.

7. Dispositif à compensation de rayonnement parasite selon l'une des revendications 1 à 6, **caractérisé en ce que** la au moins une unité de compensation de rayonnement parasite (26, 27, 28, 29) est réalisée sous forme de source de courant commandée en tension, de gyrateur, d'impédance variable, de résistance variable ou d'inductance variable.
